Europäisches Patentamt

European Patent Office

Office européen des brevets

(19)

(11) EP 0 912 020 A2

(12) **EUROPÄISCHE PATENTANMELDUNG**

(43) Veröffentlichungstag:
28.04.1999 Patentblatt 1999/17

(51) Int Cl.⁶: **H04L 25/06**

(21) Anmeldenummer: 98440228.9

(22) Anmeldetag: 16.10.1998

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 25.10.1997 DE 19747249
18.02.1998 DE 19806682

(71) Anmelder: ALCATEL
75088 Paris (FR)

(72) Erfinder:
• Bülow, Henning, Dr.
70597 Stuttgart (DE)
• Schlag, Erwin
71665 Vaihingen (DE)

(74) Vertreter: Rausch, Gabriele, Dr. et al
Alcatel
Intellectual Property Department, Stuttgart
Postfach 30 09 29
70449 Stuttgart (DE)

(54) **Entscheidungsverfahren mit adaptiven Schwellwerten**

(57) Es wird ein Verfahren sowie ein rückgekoppeltes Filter zur Entzerrung von digitalen Signalen vorgeschlagen, wobei die Signale mit Schwellwertentscheidern, Multiplexern sowie einer Verzögerungseinheit 6, die ein verzögertes Signal zur Beschaltung des Multiplexers rückkoppelt, ausgebildet ist, wobei ein Eingangssignal 1 mindestens 4 Schwellwertentscheider 2 parallel durchläuft und die Ausgangssignale 3 der Schwellwertentscheider 2 von mindestens einem Multiplexer 4 auf die Verzögerungseinheit 6 geschaltet werden und die Verzögerungseinheit 6 aus mindestens zwei Verzögerungsstufen besteht, deren verzögerten Signale 9, 10 den mindestens einen Multiplexer 4 schalten.

Fig.1

EP 0 912 020 A2

**Beschreibung**

Die Erfindung geht aus von einem Verfahren sowie einem rückgekoppelten Filter für die Entzerrung von digital übertragenen Signalen nach der Gattung der unabhängigen Ansprüche.

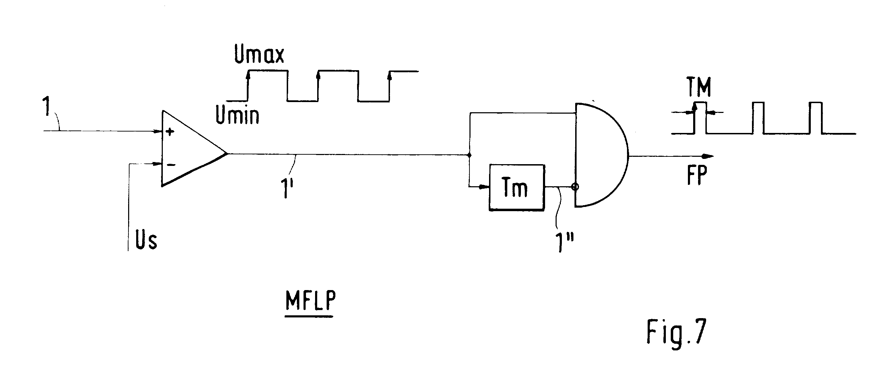

Neben der Dämpfung ist die Signaldispersion der optischen Signale das hauptsächlich limitierende Kriterium, das Übertragungsstrecken und Bitraten in faseroptischen Systemen beeinflußt. Die Effekte der Dispersion und ihre Limitierungen können durch geeignete Signalverarbeitung des rückgewonnenen elektrischen Signals ausgeglichen werden. Im praktischen Einsatz ist es dabei notwendig, die Signalverarbeitung adaptiv zu gestalten, da die Dispersionseffekte der Faser sich mit der Zeit verändern. Durch die Dispersionseffekte, beispielsweise hervorgerufen durch Polarisationsmodendispersion treten Überlappungen von Signalanteilen unterschiedlicher Polarisation auf. Die Signale werden aufgrund dieser Dispersionseffekte zeitlich verschmiert und kommen unaufgelöst im optischen Empfänger an. Um die Signale, die aufgrund von Dispersionseffekte überlagert im Empfänger ankommen, wieder zu trennen, werden nichtlineare elektronische Filter zur Entzerrung der Signale eingesetzt. Aus der Veröffentlichung „Adaptiv nonlinear cancelation for high speed fiber optic systems" Jack Winters und S. Kasturia, Journal of Lightwave Technology, Vol. 10, Nr. 9, Seite 971ff ist ein nichtlineares elektronisches Filter bekannt. Um die zeitlichen Probleme mit der analogen Rückkopplung im nichtlinearen Filter zu verkleinern, werden zwei Schwellwertentscheider mit unterschiedlichen Schwellwerten parallel zueinander geschaltet. Die Ergebnisse der parallel geschalteten Schwellwertentscheider werden über einen ansteuerbaren Multiplexer zusammengeführt. Die in Figur 7 dargestellte Ausführungsform verwendet zwei Schwellwertentscheider, deren Ausgänge mit einem Multiplexer verbunden sind. Ein D-Flip-Flop und eine Rückkoppelschleife beschalten den Multiplexer des Filters. Eine periphere Elektronik ermittelt die einzustellenden Schwellwerte und speichert sie über Kondensatoren ab. Die Zeitkonstanten der Schwellwert-Elektronik liegen somit fest. Mit einem solchen nichtlinearen Filter lassen sich Signale entzerren, wenn die Verzögerungen zwischen langsamen und dem schnellen Signalanteilen sich innerhalb eines Zeittakts bewegen.

Zur Rückgewinnung des Signaltaktes, mit dem die Schwellwertentscheider angesteuert werden, können herkömmliche Taktschaltungen mit phasenveriegelten Schleifen, sogenannte PLL-Schaltungen (phase locked loop), verwendet werden. Jedoch kommt es bei sehr starken Verzerrungen, die beispielsweise bei einer großen PDM auftreten, zu folgendem Problem: Der mit üblichen Taktschaltungen regenerierte Signaltakt hat eine starke Phasenschwankung, deren Größe abhängig von der Signalverzerrung ist. Deshalb muß bei starken Signalsverzerrungen üblicherweise die Taktschaltung noch um zusätzliche Phasenschieber erweitert werden, die als adaptive Regler in den Taktpfad eingefügt werden, um die im Phasenschwankungen zu kompensieren.

Dem gegenüber hat das erfindungsgemäße Verfahren sowie das erfindungsgemäße rückgekoppelte Filter den Vorteil daß Echoverzögerungen zwischen langsamen und schnellen Signalanteilen über mehrere Zeittakte hinaus entzerrt werden können. Weiterhin können Verzerrungen unterschiedlichen Ursprungs , wie PMD (PolarisationsModendispersion) und chromatische Dispersion die gleicgzeitig auftreten, ebebfalls reduziert werden. Dazu werden vorteilhafterweise mindestens vier Schwellwertentscheider parallel geschaltet, wobei die Ausgänge über mindestens einen Multiplexer zusammengeführt werden und das die Beschaltung der Multiplexer über mindestens zwei Rückkopplungsschleifen erfolgt. Weiterhin ist möglich, die Schwellwerte über eine externe Einheit an die Änderungen des Dispersionsverhaltens der Übertragungsfaser anzupassen, ohne daß die Schwellwerteinstellung einer zeitkritischen Rückkopplung folgen muß.

Die Aufgabe der Rückgewinnung des Signaltaktes wird gelöst durch eine Entzerrerschaltung, die mit einer erfindungsgemäßen Taktschaltung ausgestattet ist, die mittels Vergleich des Eingangssignals mit einem vorgebbaren Schwellwert die steigende oder die fallende Flanke des Eingangssignals detektiert, und die den Signaltakt durch Synchronisation auf diese Flanke regeneriert.

Durch die in den Unteransprüchen aufgeführten Maßnahmen sind vorteilhafte Weiterbildungen und Verbesserungen des in den unabhängigen Ansprüchen angegebenen Verfahrens sowie des rückgekoppelten Filters möglich.

Besonders vorteilhaft ist dabei, daß die Rückkopplung der Ausgangssignale der Verzögerungsschaltung mit dem Datentakt c erfolgt, während die Einstellung der Entscheider über eine Prozessoreinheit langsamer erfolgen kann.

Es ist weiterhin von Vorteil, das die langsamere Einstellung der Schwellwerte aufgrund von Meßwerten erfolgt, die eine externe Detektion des Ausgangssignals ermittelt und einem Prozessoreinheit zur Auswertung übergibt.

Weiterhin ist es von Vorteil, das die Verzögerungseinheit aus einem Master-Slave- D-Flip-Flop und einem nachgeschalteten Latch-Flip-Flop besteht. Dadurch wird in der ersten Rückkopplungsschleife eine sichere Detektion des Signalzustandes erreicht, während in der zweiten Rückkopplungsschleife eine schnelle Rückkopplung erfolgen kann.

Vorteilhafterweise kann die Verzögerungseinheit als Schieberegister mit Logikeinheit realisiert werden.

Vorteilhafterweise wird ein rückgekoppeltes Filter in einer Kombinationsschaltung verwendet, wobei das rückgekoppelte Filter entweder mit einemoder mehreren linearen Filter oder weiteren rückgekoppelten Filtern parallel geschaltet wird. Dabei ist es von Vorteil, daß Entscheiderschwellen sowohl konstant als auch einstellbar ausgelegt sind.

Für eine weitere Entzerrung der Signale erweist sich Vorschaltung eines analogen Filters als Vorteil, wobei dieses Filter als adaptives Filter ausgelegt sein kann.

Zu einer optimalen Signalentzerrung sind auch Filterkombination einsetzbar, in denen rückgekoppelte Filter mit zwei Schwellwertentscheidern mit linearen, adaptiven oder nichtadaptiven Filtern sowie mit erfindungsgemäßen rückgekoppelten Filtern mit mindesten vier Schwellwertentscheidern zusammenarbeiten.

Die Signaltaktrückgewinnung in der Entzerrerschaltung kann besonders vorteilhaft ausgestaltet werden, indem die Taktschaltung mit einer ersten Schaltung versehen wird, die das Eingangssignal mit dem vorgebbaren Schwellwert vergleicht, um die Amplitude des Eingangssignals auf einen durch den Schwellwert vorgegebenen Wertebereich zu begrenzen, und die die steigende oder die fallende Flanke des amplitudenbegrenzten Eingangssignals innerhalb eines vorgebbaren Zeitfensters detektiert, um Ausgangspulse gleicher Zeitdauer zu erzeugen. Die Flanke wird z.B. durch Abtastung zu unterschiedlichen Zeitpunkten und durch Vergleich dieser Abtastwerte detektiert. Durch die Amplitudenbegrenzung wird die Flankendetektion besonders einfach und sicher.

Besonders vorteilhaft ist es, wenn die Taktschaltung zusätzlich eine zweite Schaltung enthält, die der ersten Schaltung nachgeschaltet ist und die aus den Ausgangspulsen durch Synchronisation auf dessen Flanken den Signaltakt regeneriert. Zur weiteren Stabilisierung der Flankendetektion wird also zusätzlich eine phasenverriegelte Schleife (PLL) oder ein Filter nachgeschaltet.

Außerdem ist es von Vorteil, wenn die erste Schaltung ein flankengetriggertes Monoflop ist mit einem Totzeitglied, das das amplitudenbegrenzte Eingangssignal um die Zeitdauer verzögert, die die Größe des Zeitfensters bestimmt und die kleiner als etwa die halbe Bitdauer des Eingangssignales ist, mit einer Inverterstufe, die das zeitverzögerte Eingangssignal invertiert, und mit einem UND-Gatter, das das amplitudenbegrenzte Eingangssignal und das invertierte, zeitverzögerte Eingangssignal miteinander logisch verknüpft, um die Ausgangspulse zu erzeugen. Durch diese einfachen Maßnahmen wird ein Zeitfenster über das amplituden begrenzte Signal gelegt, um sicherzustellen, daß auch bei besonders großer Signalverzerrung nur die ansteigende (positive) oder nur die abfallende (negative) Flanke detektiert wird.

Ein weiterer Vorteil ergibt sich, wenn die zweite Schaltung, die vorzugsweise eine phasenverriegelte Schleife (PLL) ist, sich auf die ansteigende Flanke der Ausgangspulse aufsynchronisiert. Dadurch wird eine stabiliesierte Detektion der positiven Flanke erzielt, d.h.

derjenigen Flanke, die nicht von Echoanteilen im Signal gestört ist.

Es ist auch besonders vorteilhaft, wenn die Entzerrerschaltung zusätzlich zur Taktschaltung mit einer Detektorschaltung ausgestattet ist, die zur Veänderung des Schwellwertes des mindestens einen getakteten Schwellwertentscheiders, den das rückgekoppelte Filter enthält, das Ausgangssignal des Filters mit dem um die Filter-Durchlaufzeit verzögerten Eingangssignal vergleicht und daraus eine Signalgüte des entzerrten Ausgangssignales ableitet, die den Schwellwert bestimmt. Die Entzerrerschaltung enthält also zusätzlich eine Schaltung, die das Filter in Abhängigkeit von der Signalgüte einstellt. Da die Taktschaltung einen stabilen Signaltakt liefert, kann diese Schaltung einfach aufgebaut sein; insbesondere werden keine Adaptionsmittel zum Ausgleich von Phasenschwankungen benötigt. Als Schaltung eignet sich besonders ein Augendetektor, der das Augendiagramm des entzerrten Ausgangsignales ermittelt und der eine sich entsprechend der Augenöffnung ändernde Spannung erzeugt, die die Signalgüte angibt.

Ausführungsbeispiele der Erfindung sind in der Zeichnung dargestellt und in der nachfolgenden Beschreibung näher erläutert.

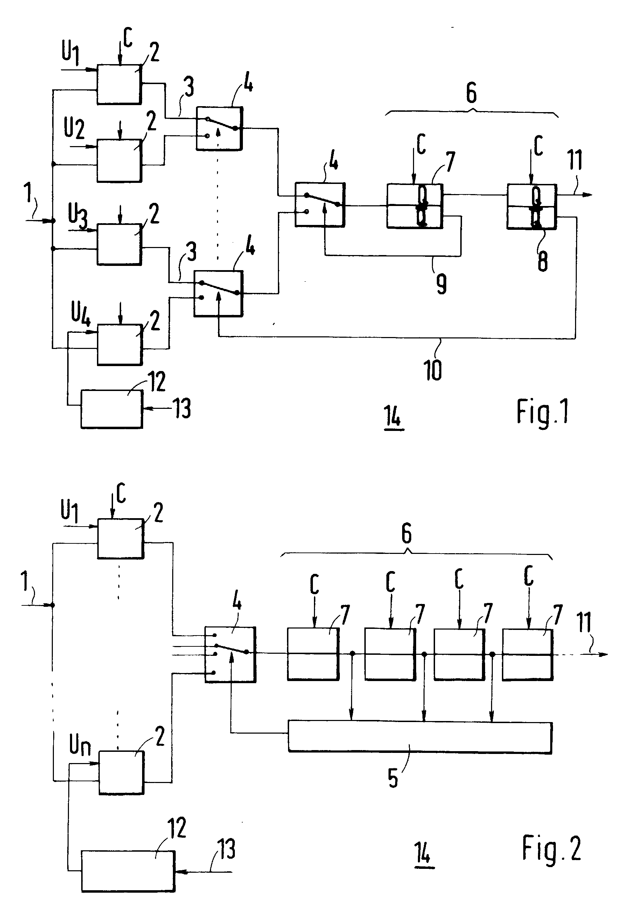

Es zeigt Figur 1 eine Schaltung mit vier Entscheidern,

Figur 2 eine Schaltung mit mehr als vier Entscheidern,
Figur 3 eine Filterkombination,
Figur 4 eine erweiterter Filterkombination und
Figur 5 eine Messung der Filterergebnisse.
Figur 6 das Blockschaltbild einer Entzerrerschaltung für einen optischen Empfänger;
Fig. 7 den Aufbau einer Taktschaltung für diese Entzerrerschaltung
Fig. 8, ein rückgekoppeltes Filter für diese Entzerrerschaltung.

Figur 1 zeigt vier Schwellwertentscheider 2, die parallel zueinander geschaltet sind und eingangsseitig mit dem Eingangssignal 1 verbunden sind. Die Schwellwertentscheider 2 weisen weitere Eingänge für die Schwellwerte $U_{1..4}$ sowie für den Datentakt c auf. Die Ausgänge der Schwellwertentscheider 2 liegen jeweils paarweise an einem Multiplexer 4 an. Die Ausgänge der ersten Multiplexer-Stufe 4 sind mit den Eingängen einer weiteren Multiplexer-Stufe 4' verbunden. Der Ausgang dieses Multiplexers 4' liegt am Eingang eines D-Flip-Flops 7 an, dessen Q-Ausgang mit dem Eingang eines Latch-Flip-Flop 8 verbunden ist. Der $\overline{\overline{Q}}$-Ausgang des D-Flip-Flop 7 ist in den Multiplexer 4 der zweiten Stufe rückgekoppelt. Der Ausgang Q des Latch-Flip-Flops 8 liefert das rekonstruierte Ausgangssignal 11. Der $\overline{Q}$-Ausgang des Latch-Flip-Flops 8 wird über die Rückkopplungsschleife 10 in die erste Multiplexerstufe 4 rückgekoppelt.

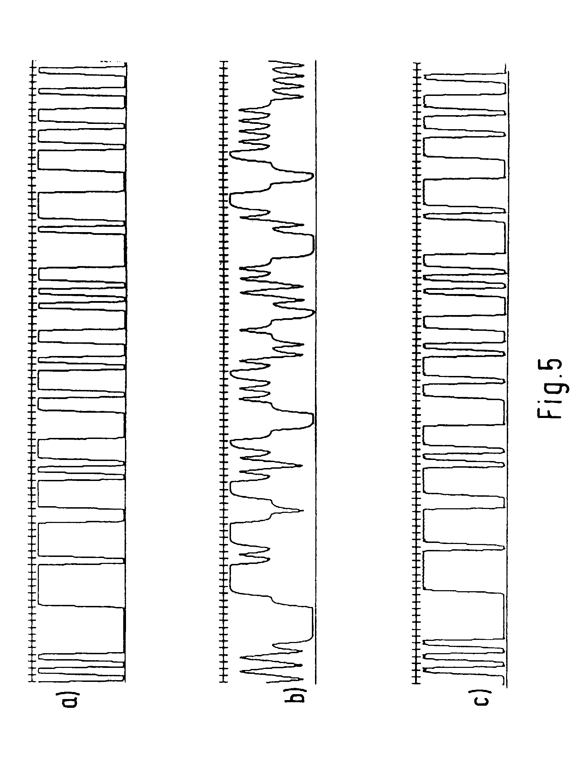

Das Eingangssignal ist aufgrund von Dispersionseffekten verzerrt. Wie man zum Beispiel aus Figur 5 erkennen kann ist das Eingangssignal stufig strukturiert, da Polarisationsanteile des Signals schnell und langsam über die Glasfaser transportiert werden. Das stufige Eingangssignal am optoelektronischen Wandler ist hier beispielsweise für einen Laufzeitunterschied von 1,5 Perioden sowie einer gleichen Intensitätsverteilung zwischen den unterschiedlichen Polarisationsmoden aufgetragen.

Das Eingangssignal wird auf die vier Schwellwertentscheider 2 aufgeteilt. Jeder Schwellwertentscheider 2 besitzt eine individuelle Schwelle $U_{1-4}$. Die Einstellung dieses Schwellwerts geschieht über eine digitale Prozessoreinheit 12, die die Meßergebnisse 13 einer externen Messung auswertet. Als externe Messung kann dabei die Auswertung des Augendiagramms des Ausgangssignals 11 dienen. Aus der gemessenen Augenöffnung wird eine Anpassung des Schwellwerts $U_{1-4}$ errechnet. Je nach Schwellwert liefern die Ausgänge der Schwellwertentscheider Schwellwertsignale 1 oder 0, die in der ersten Multiplexerstufe anliegen. Über die zweite Multiplexerstufe 4 geht ein Signal an das Master-Slave- D-Flip-Flop 7. Dieses Master-Slave-Flip-Flop verzögert das eingehende Signal um einen Datentakt. Da es sich hier um ein Master-Slave-Flip-Flop handelt ist die Speicherung des Signals sehr sicher und die Zeitverzögerung zwischen Eingangs- und Ausgangssignal beträgt gerade einen Datentakt. Solange der Takt 1 ist, wird die Eingangsinformation in den Master eingelesen. Der Ausgangszustand bleibt unverändert, da der Slave blockiert ist. Wenn der Takt auf 0 geht, wird der Master blockiert und auf diese Weise der Zustand eingefroren der unmittelbar vor der negativen Taktflanke angelegen hat. Gleichzeitig wird der Slave freigegeben und der Zustand des Masters an den Ausgang übertragen. Es gibt keinen Taktzustand, bei dem sich die Eingangsdaten unmittelbar auf den Ausgang auswirken. Daher wird ein solches Flip-Flop für eine sichere Detektion und unabhängige Auswertung des Eingangssignals verwendet. Für die zeitkritischere Rückkopplungsschleife 10 wird ein transparentes Flip-Flop 8 eingesetzt, das ohne eine weitere Verzögerung die erste Multiplexerstufe 4 beschaltet. Der Einsatz des Latch-Flip-Flop ist bei einer Ausführung mit zwei Rückkopplungsschleifen notwendig, da die zweite Schleife 10 sehr zeitkritisch ist. Eine solche Schaltung mit vier Schwellwertentscheidern kann Signalverzögerungen zwischen den beiden Polarisationsmoden eines Bit von 0 bis etwa 200 ps bei 10 Gbit/s optimal ausgleichen. Die Schwellwerte der Schwellwertentscheider 2 werden zunächst aufgrund von Messungen optimal eingestellt und können über die digitale Prozessoreinheit 12 nachgeregelt werden, wenn sich das Dispersionsverhalten der Faser mit der Zeit ändert.

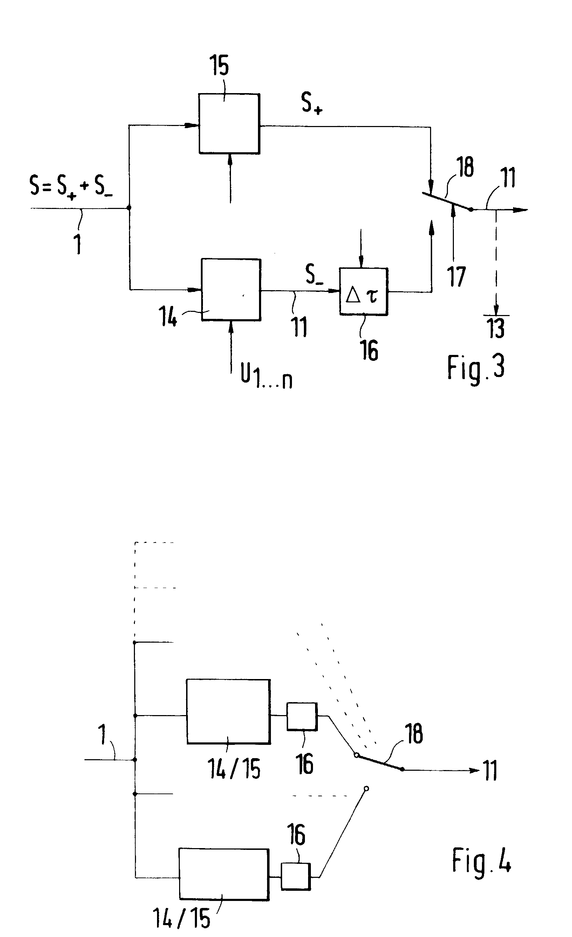

Figur 2 zeigt ein Ausführungsbeispiel, bei dem Eingangssignal 1 auf mehr als vier Entscheider 2 aufgeteilt wird. Die Anzahl der Entscheider ist dabei von der Art der Störung abhängig. Die Entscheider weisen jeweils wieder einen Schwellwerteingang $U_1$ bis $U_n$ auf, der von einem digitalen Prozessor 12 extern geregelt wird. Die Ausgänge der Entscheider 2 liegen an einem Multiplexer 4 an, der von einer Logikeinheit 5 beschaltet wird. Die Logikeinheit 5 wertet die Ausgänge einzelner Flip-Flops 7 der Verzögerungslogik 6 aus, um den Multiplexer 4 zu beschalten. Am Ausgang des Schieberegisters entsteht das Ausgangssignal 11. Bei dieser Ausführungsform ist die Rückkopplung der zeitverzögerten Ausgangssignale der Flip-Flops zum Multiplexer nicht mehr zeitkritisch, so daß hier normale Master-Slave-Versionen eingesetzt werden. Figur 3 zeigt die parallele Schaltung eines erfindungsgemäßen rückgekoppelten Filters 14 zu beispielsweise linearen Filter 15. Das Eingangssignal 1 besteht aus den Signalanteilen der beiden Polarisationsmoden $S_+$ und $S_-$. Die beiden Signalzweige werden an einem Schalter 18 zusammengeführt, der von einem Umschaltpuls 17 geschaltet wird. Die Qualität des Ausgangssignals 11 wird von einer externen Detektion 13 festgestellt. Zum Ausgleich von Laufzeitunterschieden in den beiden Signalzweigen ist ein Laufzeitglied 16 vorgesehen.

In Figur 4 ist die parallele Anordnung von mehreren rückgekoppelten und/oder linearen Filtern angedeutet. Laufzeitglieder 16 passen die Signallaufzeiten der Signalzweige aneinander an, damit nach einer Umschaltung am Schalter 18 das Signal synchron weiterläuft.

Figur 5 zeigt ein beispielhaftes Signal a), das aufgrund von Dispersionseffekten Verzerrungen b) ausbildet. Nach Durchlaufen des erfindungsgemäßen rückgekoppelten Filters wird das ursprüngliche Signal c) zurückgewonnen.

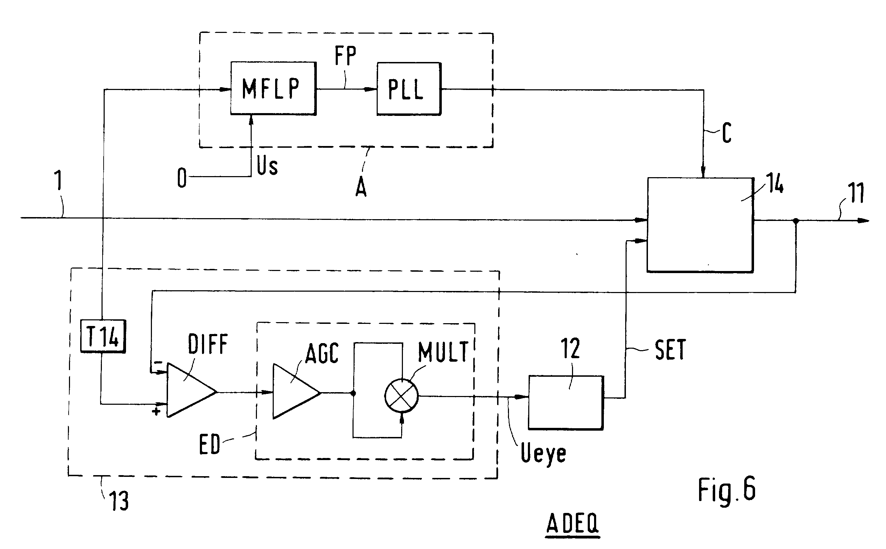

Die in Fig. 6 schematisch dargestellte Entzerrerschaltung ADEQ hat ein rückgekoppeltes Filter 14, auf das das Eingangssignal 1 geführt wird und das das Ausgangssignal 11 liefert. Außerdem hat die Entzerrerschaltung eine Taktschaltung A, die aus dem Eingangssignal 1 den Signaltakt C zurückgewinnt, um ihn auf den Takteingang des rückgekoppelten Filters 14 zu führen. Weiterhin enthält die Entzerrerschaltung eine Detektorschaltung 13 mit zwei Eingängen, auf die das zu entzerrende Eingangssignal 1 sowie das entzerrte Ausgangssignal 11 geführt werden und die eine Ausgangsspannung Ueye erzeugt, die die Signalgüte des entzerrten Ausgangssignales 11 angibt.

Darüberhinaus enthält die Entzerrerschaltung eine der Detektorschaltung 13 nachgeschaltete Steuerschaltung 12, die aus der Spannung Ueye Steuersignale, insbesondere Schwellwerte SET erzeugt, um die Filterparameter des rückgekoppelten Filters 14 einzustellen.

Die Taktschaltung A enthält eine erste Schaltung MFLP, die das Eingangssignal 1 mit einem vorgebbaren Schwellwert Us vergleicht und die Ausgangspulse FP erzeugt. Außerdem enthält die Taktschaltung A eine der ersten Schaltung nachgeschaltete zweite Schaltung PLL, die aus den Ausgangspulsen FP durch Synchronisation auf dessen Flanken den Signaltakt C erzeugt. Der Aufbau und die Arbeitsweise der Taktschaltung A wird später noch eingehend anhand der Fig. 3 beschrieben.

Die in Fig. 6 gezeigte Detektorschaltung 13 enthält einen Differenzierer DIFF, der der das Eingangssignal 1 mit dem Ausgangssignal 11 vergleicht und der ein Differenzsignal erzeugt. Das Eingangssignal 1 wird am Eingang des Differenzierers durch ein Totzeitglied um die Filter-Duchlaufzeit T14 verzögert, um in derselben Zeitlage wie das Ausgagnssignal 11 am Differenzierer anzuliegen. Außerdem enthält die Detektorschaltung 13 einen dem Differenzierer nachgeschalteten Augendetektor ED, der aus dem Differenzsignal die Spannung Ueye erzeugt, die die Signalgüte des Ausgangssignales 11 angibt. Dazu enthält der Augendetektor ED einen Eingangsverstärker AGC und einen nachgeschalteten Multiplizierer MULT, der einer Mischstufe entspricht. Durch Verstärkung des Differenzsignales in dem Verstärker AGC (automatic gain control) und durch die anschließende Verarbeitung in der Mischstufe MULT wird die Spannung Ueye erzeugt. Die Spitzen-Spitzen-Spannung der Augenöffnung wird in der Mischstufe konstant gehalten. Sie die sogenannte Augenöffnung wieder, die ein Maß für die Güte des Ausgangssignales 11 1 darstellt. Aus dieser Spannung Ueye werden in der nachgeschalteten Steuerschaltung 12 Filterparameter, insbesondere Schwellwerte SET, erzeugt, die das rückgekoppelte Filter 14 adaptiv einstellen.

Fig. 6 zeigt, daß das rückgekoppelte Filter 14 von den folgenden aufbereiteten Signalen angesteuert wird: Erstens von dem Signaltakt C, den die erfindungsgemäße Taktschaltung A regeneriert und zweitens von den Schwellwerten SET, die mittels der Augendetektorschaltung erzeugt werden, um die Filterparameter einzustellen. Beide Maßnahmen können unabhängig voneinander eingesetzt werden, um die Arbeitsweise des rückgekoppelten Filters zu verbessern. Das bedeutet, daß erstens die Entzerrerschaltung auch schon durch die Taktschaltung allein so verbessert werden kann, daß ein phasenstarrer stabiler Takt erzeugt wird, und daß zweitens die Entzerrerschaltung auch schon durch die Detektorschaltung allein so verbessert werden kann, daß das rückgekoppelte Filter in Abhängigkeit von der Signalgüte adaptiv eingestellt wird. Es ist jedoch besonders vorteilhaft beide Maßnahmen zusammen einzusetzen, weil dadurch erreicht wird, daß das Filter 14 bereits von einem stabilisierten Signaltakt C angesteuert wird und somit ein phasenstabilisiertes Ausgangssignal 11 1 liefert, daß wiederum einfacherer in der Augendetektorschaltung ED verarbeitet werden kann. Da das Ausgangssignal 11 stabilisiert ist, werden innerhalb der Augendetektorauswerteschaltung 1 2 keine Signalverarbeitungsstufen benötigt, die Phasenschwankungen im Ausgangssignal ausgleichen müßten.

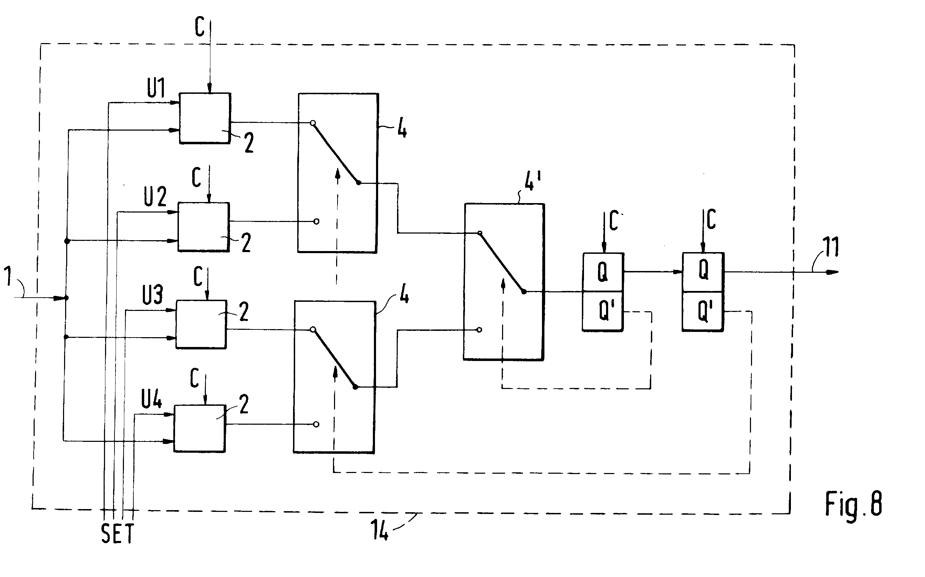

Bevor der Aufbau des rückgekoppelten Filters 14 anhand der Fig. 8 näher beschrieben wird, wird zunächst Fig. 7 beschrieben, die den schematischen Aufbau der erfindungsgemäßen Taktschaltung A zeigt:.

In Fig. 7 ist die erste Schaltung MFLP gezeigt, die aus dem Eingangssignal 1 Ausgangspulse FP mit gleicher Zeitdauer $T_M$ zurückgewinnt. Diese erste Schaltung hat die Funktion eines flankengetriggerten Monoflops und enthält am Eingang einen Differenzierer oder einen Schmitt-Trigger, der das Eingangssignal 1 mit einem Schwellwert Us vergleicht. Diesem Differenzierer ist ein UND-Logik-Gatter nachgeschaltet, daß einen invertierten und einen nichtinvertierten Eingang hat. Die Ausgangsspannung des Differenzierers wird direkt auf den nichtinvertierten Eingang geführt und indirekt über ein Totzeitglied Tm auf den invertierten Eingang geführt. Am Ausgang des UND-Gatters erscheinen dann die Ausgangspulse FP mit der gleichen Zeitdauer TM. Diese Ausgangspulse FP werden dann auf die nicht in Fig. 2 dargestellte zweite Schaltung (siehe PLL in Fig. 6) geführt.

Die Arbeitsweise des in Fig. 7 dargestellten flankengetriggerten Monoflops MFLP ist die folgende:

Durch den Vergleich des Eingangssignales 1 mit dem Schwellwert Us innerhalb des Differenzierers wird das Eingangssignal 1 zunächst amplitudenbegrenzt, so daß im Falle einer logischen "0" sich eine minimale Spannung Umin einstellt und im Falle einer logischen "1" sich eine maximale Spannung Umax einstellt. Wird ein Schmitt-Trigger eingesetzt, so wird ein Ausgangssignal erzeugt, dessen Pegel zwischen "0" und "1" schwankt (binärer Wertebereich). Der Schwellwert Us ist so gewählt, daß er etwa ein Viertel bis ein Drittel der Amplitude des Eingangssignales 1 beträgt. Dadurch wird erreicht, daß eine positive Flanke detektiert wird, sobald der Signalverlauf des Eingangssignales 1 abrupt ansteigt (vergl. Fig. 5) und solange noch keine Störungen aufgrund von Echoanteilen auftreten können. Deshalb erzeugt der Differenzierer an seinem Ausgang ein amplitudenbegrenztes Signal 1', das abrupt zwischen Umin und Umax wechselt, wobei seine positive Flanke weitgehend exakt der positiven Flanke des Eingangssignales 1 entspricht. Es ist auch möglich die fallende Flanke, also die negative Flanke, zu detektieren. Jedoch ist es vorteilhaft, die positive Flanke zu detektieren, da diese noch nicht durch Echoanteile gestört ist (s. auch Fig. 5).

Das amplitudenbegrenzte Eingangssignal 1' wird in der nachfolgenden Logikschaltung weiter verarbeitet zu den Ausgangsimpulsen FP. Durch die Beschaltung des UND-Gatters mit dem Totzeitglied Tm wird erreicht, daß das amplitudenbegrenzte Eingangssignal 1' einer Zeitfensterfunktion unterworfen wird, wobei die positive Flanke erhalten bleibt und die späteren Signalanteile ausgeblendet werden. Daher besteht das Ausgangssignal des UND-Gatters aus Ausgangspulsen FP mit der gleichen Breite TM. Diese Ausgangspulse könnten bereits als Signaltakt für die Ansteuerung des rückgekoppelten Filters dienen; sie sollen jedoch in der zweiten Schaltung noch durch eine nachgeschaltete Synchronisationsstufe oder durch ein nachgeschaltes Filter stabilisiert werden. (s. PLL in Fig. 6).

Die Fig. 8 zeigt den schematischen Aufbau des rückgekoppelten Filters 14, der aus dem verzerrten Eingangssignal 1 das entzerrte Ausgangssignal 11 bildet und der von dem Signaltakt C angesteuert wird sowie von den Filterparametern SET adaptiv eingestellt wird. Als rückgekoppeltes Filter kann eine Schaltung mit nur einem getakteten Schwellwertentscheider verwendet werden. Vorzugweise werden aber mindestens zwei Schwellwertentscheider eingesetzt, in diesem Ausführungsbeispiel genau vier.

Fig. 8 zeigt vier Schwellwertentscheider 2, die parallel zueinander geschaltet sind und eingangsseitig mit dem Eingangssignal 1 verbunden sind. Die Schwellwertentscheider 2 weisen weitere Eingänge für die Schwellwerte SET (die unterteilt sind in die Spannungen $U_1$, $U_2$, $U_3$ und $U_4$) sowie für den Signaldatentakt C auf. Die Ausgänge der Schwellwertentscheider 2 liegen jeweils paarweise an einer Multiplexer-Stufe 4 an. Die Ausgänge der ersten Multiplexer-Stufe 4 sind mit den Eingängen einer weiteren Multiplexer-Stufe 4' verbunden. Der Ausgang dieses Multiplexers 4' liegt am Eingang eines D-Flip-Flops an, dessen Q-Ausgang mit dem Eingang eines Latch-Flip-Flop verbunden ist. Der invertierte Q'-Ausgang des D-Flip-Flop ist in den Multiplexer 4 der zweiten Stufe rückgekoppelt. Der Ausgang Q des Latch-Flip-Flops liefert das rekonstruierte Ausgangssignal 11. Der invertierte Q'-Ausgang des Latch-Flip-Flops wird über die Rückkopplungsschleife in die erste Multiplexer-Stufe 4 rückgekoppelt.

Das Eingangssignal 1 wird auf die vier Schwellwertentscheider 2 aufgeteilt. Jeder Schwellwertentscheider 2 besitzt eine individuelle Schwelle (die Spannungen $U_{1-4}$). Die Einstellung dieser Schwellwerte SET geschieht über eine digitale Prozessoreinheit 12, die die Augenöffnung (Spannung Ueye) am Ausgang der Detektorschaltung 13 (s. Fig1) auswertet. Aus der gemessenen Augenöffnung und durch deren Änderung wird also eine Anpassung der Schwellwerte $U_{1-4}$ errechnet. Je nach Schwellwert liefern die Ausgänge der Schwellwertentscheider 2 logische Signale "1" oder "0", die in der ersten Multiplexerstufe 4 anliegen. Über die zweite Multiplexerstufe 4' geht ein Signal an das D-Flip-Flop, das als Master-Slave-Flip-Flop dient und das eingehende Signal um einen Datentakt verzögert.

Da es sich hier um ein Master-Slave-Flip-Flop handelt ist die Speicherung des Signals sehr sicher und die Zeitverzögerung zwischen Eingangs- und Ausgangssignal beträgt gerade einen Datentakt. Solange der Takt auf logisch "1" ist, wird die Eingangsinformation in den Master eingelesen. Der Ausgangszustand bleibt unverändert, da der Slave blockiert ist. Wenn der Takt auf logisch "0" geht, wird der Master blockiert und auf diese Weise der Zustand eingefroren, der unmittelbar vor der negativen Taktflanke angelegen hat. Gleichzeitig wird der Slave freigegeben und der Zustand des Masters an den Ausgang übertragen. Es gibt keinen Taktzustand, bei dem sich die Eingangsdaten unmittelbar auf den Ausgang auswirken. Daher wird ein solches Flip-Flop für eine sichere Detektion und unabhängige Auswertung des Eingangssignals verwendet.

Für die zeitkritischere Rückkopplungsschleife kann ein Master-Slave-Flip-Flop oder ein schnelles Latch-Flip-Flop, also ein transparentes Flip-Flop, eingesetzt werden, das ohne eine weitere Verzögerung die erste Multiplexerstufe 4 beschaltet. Der Einsatz des Latch-Flip-Flop ist bei einer Ausführung mit zwei Rückkopplungsschleifen notwendig, da die zweite Schleife sehr zeitkritisch ist. Eine solche Schaltung mit vier Schwellwertentscheidern kann Signalverzögerungen zwischen den beiden Polarisationsmoden eines Bit von 0 bis etwa 200 ps bei 10 Gbit/s optimal ausgleichen.

Die Schwellwerte SET der Schwellwertentscheider 2 werden zunächst aufgrund von Messungen und von Variationen der Schwellwerte optimal eingestellt und können später über die digitale Prozessoreinheit 12 nachgeregelt werden, wenn sich das Dispersionsverhalten der Faser mit der Zeit ändert.

Die Erfindung wurde am Beispiel eines optischen Empfängers beschrieben, sie ist jedoch auch einsetzbar in Empfängern für nicht-optische Signale, insbesondere in Empfängern für digitale Breitbandnetze, in denen Signale drahtgebunden oder drahtlos übertragen werden.

## Patentansprüche

1. Verfahren zur Entzerrung von digitalen Signalen, wobei das empfangene Signal (1) aufgrund von Schwellwerten ($U_1$...), ausgewertet wird, dadurch gekennzeichnet, daß eine Schwellwertentscheidung mit mindestens vier Schwellwertentscheidern (2) vorgenommen wird, wobei mindestens ein Multiplexer (4) die Ausgänge der Schwellwertentscheider (2) mit einer nachgeschalteten Verzögerungslogik (6) verbindet, und daß der mindestens eine Multiplexer (4) mit mindestens einem rückgekoppelten Ausgangssignal (9, 10) der Verzögerungsschaltung (6) geschaltet wird und die Schwellwerte ($U_1$...) der Schwellwertentscheider (2) über eine digitale Prozessoreinheit (12) adaptiv eingestellt werden.

2. Verfahren zur Entzerrung von digitalen Signalen nach Anspruch 1, dadurch gekennzeichnet, daß die Rückkopplung der Ausgangssignale der Verzögerungsschaltung (6) im Datentakt c und die Einstellung der Schwellwerte der Schwellwertentscheider (2) in einem langsameren Zeitrahmen erfolgt.

3. Rückgekoppeltes Filter (14) für die Entzerrung von digital übertragenen Signalen mit Schwellwertentscheidern (2), Multiplexer (4) sowie einer Verzögerungseinheit (6), die ein verzögertes Signal zur Beschaltung des Multiplexers rückkoppelt, dadurch gekennzeichnet, daß ein Eingangssignal (1) mindestens vier Schwellwertscheider (2) parallel durchläuft und die Ausgangssignale (3) der Schwellwertscheider (2) von mindestens einem Multiplexer (4) auf die Verzögerungseinheit (6) geschaltet werden, und die Verzögerungseinheit (6) aus mindestens zwei Verzögerungsstufen (7, 8) besteht, deren verzögerte Signale (9, 10) den mindestens einen Multiplexer (4) schalten.

4. Rückgekoppeltes Filter (14) nach Anspruch 3, dadurch gekennzeichnet, daß die Schwellwerte von einem Signalprozessor (12) über Meßwerte einer externen Detektion (13) einstellbar sind.

5. Rückgekoppeltes Filter (14) nach einem der vorhergehenden Ansprüche, dadurch gekennzeichnet, daß die Verzögerungseinheit (6) aus einem Master-Slave-D-Flip-Flop (7) und einem Latch-Flip-Flop (8) besteht.

6. Rückgekoppeltes Filter(14) nach einem der vorhergehenden Ansprüche, dadurch gekennzeichnet, daß die Verzögerungseinheit (6) ein Schieberegister ist und eine Logikeinheit (5) das an den den Multiplexer rückgekoppelte Signal auswählt.

7. Verwendung eines rückgekoppelten Filters (14) nach einem der vorhergehenden Ansprüche in einer Schaltung mit parallel geschalteten Filtern, deren jeweiliger Ausgang über einen Steuersignal (17) auf die Ausgangsleitung geschaltet wird, dadurch gekennzeichnet, daß das rückgekoppelte Filter (14) parallel zu mindestens einem linearen Filter (15) und/oder mindestens einem rückgekoppelten Filter (14) eingesetzt wird, wobei Laufzeitglieder (16) unterschiedliche Signallaufzeiten ausgleichen.

8. Verwendung eines rückgekoppelten Filters (14) nach Anspruch 7, dadurch gekennzeichnet, daß die Schwellwerte der rückgekoppelten Filter (14) adaptiv einstellbar oder fest einstellbar sind.

9. Verwendung eines rückgekoppelten Filters (14) nach einem der vorhergehenden Ansprüche, dadurch gekennzeichnet, daß dem rückgekoppelten Filter (14) ein analoges Filter vorgeschaltet ist.

10. Verwendung eines rückgekoppelten Filters (14) nach einem der vorhergehenden Ansprüche, dadurch gekennzeichnet, daß das vorgeschaltete analoge Filter adaptiv geregelt wird.

11. Verwendung eines rückgekoppelten Filters (14) nach einem der vorhergehenden Ansprüche, dadurch gekennzeichnet, daß in den Filterkombinationen auch rückgekoppelte Filter mit zwei Schwellwertentscheider verwendet werden.

12. Entzerrerschaltung (ADEQ) für digital übertragene Signale mit einem rückgekoppelten Filter (14), das mindestens einen von dem Signaltakt (C) getakteten Schwellwertscheider (2) enthält, den das zu entzerrende Eingangssignal (1) der Entzerrerschaltung durchläuft und dessen Schwellwert (SET) das Ausgangssignal (11) der Entzerrerschaltung verändert,
**gekennzeichnet durch**
eine Taktschaltung (A), die mittels Vergleich des Eingangssignals (1) mit einem vorgebbaren Schwellwert (Us) die steigende oder die fallende Flanke des Eingangssignals (1) detektiert, und die den Signaltakt (C) durch Synchronisation auf diese Flanke regeneriert.

13. Entzerrerschaltung (ADEQ) nach Anspruch 12, dadurch gekennzeichnet, daß die Taktschaltung (A) eine erste Schaltung (MFLP) enthält, die das Eingangssignal (1) mit dem vorgebbaren Schwellwert (Us) vergleicht, um die Amplitude des Eingangssignals auf einen durch den Schwellwert vorgegebenen Wertebereich (Umin; Umax) zu begrenzen, und die die steigende oder die fallende Flanke des amplitudenbegrenzten Eingangssignals innerhalb eines vorgebbaren Zeitfensters detektiert, um Ausgangspulse (FP) gleicher Zeitdauer (Tm) zu erzeugen.

14. Entzerrerschaltung (ADEQ) nach einem der vorhergehenden Ansprüche, dadurch gekennzeichnet, daß die Taktschaltung (A) eine zweite Schaltung (PLL) enthält, die der ersten Schaltung (MFLP) nachgeschaltet ist und die auf die Ausgangspulse (FP) den Signaltakt (C) synchronisiert oder die aus den Ausgangspulsen eine Signaltaktfrequenz herausfiltert.

15. Entzerrerschaltung (ADEQ) nach einem der vorhergehenden Ansprüche, dadurch gekennzeichnet, daß die erste Schaltung (MFLP) ein flankengetriggertes Monoflop (MFLP) ist mit einem Totzeitglied (Tm), das das amplitudenbegrenzte Eingangssignal (1') um die Zeitdauer ($T_M$) verzögert, die die Größe des Zeitfensters bestimmt und die kleiner als die halbe Bitdauer des Eingangssignales (1) ist, mit einer Inverterstufe, die das zeitverzögerte Eingangssignal (1") invertiert, und mit einem UND-Gatter, das das amplitudenbegrenzte Eingangssignal (1') und das invertierte, zeitverzögerte Eingangssignal (1") miteinander logisch verknüpft, um die Ausgangspulse (FP) zu erzeugen.

16. Entzerrerschaltung (ADEQ) nach einem der vorhergehenden Ansprüche, dadurch gekennzeichnet, daß die zweite Schaltung eine phasenverriegelte Schleife (PLL) ist, die sich auf die Ausgangspulse (FP) aufsynchronisiert.

17. Entzerrerschaltung (ADEQ) nach einem der vorhergehenden Ansprüche, gekennzeichnet durch eine Detektorschaltung (13), die zur Veänderung des Schwellwertes (SET) des mindestens einen getakteten Schwellwertentscheiders (2), den das rückgekoppelte Filter (14) enthält, das Ausgangssignal (1 1) des Filters mit dem um die Filterdurchlaufzeit (T14) verzögerten Eingangssignal (1) vergleicht und daraus eine Signalgüte (Ueye) des entzerrten Ausgangssignales (11) ableitet, die den Schwellwert (SET) bestimmt.

18. Entzerrerschaltung (ADEQ) nach einem der vorhergehenden Ansprüche, dadurch gekennzeichnet, daß die Detektorschaltung (13), das Augendiagramm des entzerrten Ausgangsignales (1 1) ermittelt und eine sich entsprechend der Augenöffnung ändernde Spannung (Ueye) erzeugt, die die Signalgüte angibt.

19. Optischer Empfänger mit einer Entzerrerschaltung (ADEQ) für digital übertragene Signale, die ein rückgekoppeltes Filter (14) enthält, das mindestens einen von dem Signaltakt (C) getakteten Schwellwertentscheider (2) enthält, den das zu entzerrende Eingangssignal (1) der Entzerrerschaltung durchläuft und dessen Schwellwert (SET) das Ausgangssignal (11) der Entzerrerschaltung verändert, **gekennzeichnet, durch** eine Taktschaltung (A), die mittels Vergleich des Eingangssignals (1) mit einem vorgebbaren Schwellwert (Us) die steigende oder die fallende Flanke des Eingangssignals (1) detektiert, und die den Signaltakt (C) durch Synchronisation auf diese Flanke regeneriert.

20. Optischer Empfänger nach Anspruch 19, dadurch gekennzeichnet, daß die Taktschaltung (A) eine erste Schaltung (MFLP) enthält, die das Eingangssignal (1) mit dem vorgebbaren Schwellwert (Us) vergleicht, um die Amplitude des Eingangssignals auf einen durch den Schwellwert vorgegebene Wertebereich (Um in; Umax) zu begrenzen, und die die steigende oder die fallende Flanke des amplitudenbegrenzten Eingangssignals (1') innerhalb eines vorgebbaren Zeitfensters detektiert, um Ausgangspulse (FP) gleicher Zeitdauer ($T_M$) zu erzeugen, und daß die Taktschaltung (A) eine zweite Schaltung (PLL) enthält, die der ersten Schaltung (MFLP) nachgeschaltet ist und die aus den Ausgangspulsen (FP) durch Synchronisation auf dessen Flanken den Signaltakt (C) regeneriert.

Fig.1

Fig.2

Fig. 3

Fig. 4

Fig.5

Fig. 6

ADEQ

MFLP

Fig.7

EP 0 912 020 A2

Fig. 8